# EUROPÄISCHE PATENTSCHRIFT

(11) **EP 3 665 765 B1**
(45) Veröffentlichungstag und Bekanntmachung des Hinweises auf die Patenterteilung: **21.10.2026**
(21) Anmeldenummer: 18753379.9
(22) Anmeldetag: 08.08.2018
(51) Int. Cl.: F03D 15/00, H02K 7/116, H02K 7/18, H02K 21/14, H02K 49/10

(54) **GENERATOR FÜR EINE WINDENERGIEANLAGE UND WINDENERGIEANLAGE MIT SELBIGEM**
GENERATOR FOR A WIND ENERGY CONVERTER AND WIND ENERGY CONVERTER WITH THE SAME
GÉNÉRATEUR POUR UNE CENTRALE ÉOLIENNE ET CENTRALE ÉOLIENNE AVEC LA MÊME

(30) Priorität: 08.08.2017 DE 102017118010
(43) Veröffentlichungstag der Anmeldung: 17.06.2020
(73) Patentinhaber: Wobben Properties GmbH, 26607 Aurich (DE)
(72) Erfinder: BRENNER, Albrecht, 26607 Aurich (DE); RÖER, Jochen, 27777 Ganderkesee (DE); ZIEMS, Jan Carsten, 26607 Aurich (DE)
(74) Vertreter: Eisenführ Speiser
(86) Internationale Anmeldenummer: PCT/EP2018/071543
(87) Internationale Veröffentlichungsnummer: WO 2019/030300

(56) Entgegenhaltungen:
- EP-A2- 1 353 436
- WO-A1-2016/131078
- WO-A2-2011/058185
- DE-A1- 102011 011 164

## Beschreibung

Die vorliegende Erfindung betrifft einen Generator für eine Windenergieanlage, mit einem Generatorstator mit einem Montageabschnitt zur Befestigung des Generatorstators an einem Maschinenträger der Windenergieanlage, und einem um eine Generatorachse drehbeweglich relativ zu dem Generatorstator gelagerten Generatormotor.

Generatoren der vorbezeichneten Art kommen in Windenergieanlagen in vielfältigen Ausprägungen zum Einsatz. Im Stand der Technik haben sich einerseits Windenergieanlagen etabliert, bei denen die Drehbewegung der Rotorblattnabe mittels eines mehrstufigen Getriebes mit dem Generatorrotor des Generators gekoppelt wird, wobei das mehrstufige Getriebe eine Übersetzung der von der Rotorblattnabe vorgegebenen Antriebsbewegung in eine höhere Drehzahl umsetzt. Die aus dem Stand der Technik bekannten Getriebe zeigen in hohen Belastungssituationen eine erhöhte Anfälligkeit für Störungen und Defekte. Windenergieanlagen mit getriebebehaftetem Antriebsstrang weisen üblicherweise einen asynchronen Generator auf, der prinzipbedingt hohe Drehzahlen benötigt. Windenergieanlagen mit Getriebe sind typischerweise so ausgeführt, dass die Nabe abtriebsseitig drehfest mit der zum Getriebe führenden Hauptwelle verbunden ist. Die Hauptwelle überträgt nicht nur das Antriebsmoment der Windenergieanlage, sondern auch die aus dem Wind, den Turbulenzen, der Dynamik und dem Eigengewicht der Nabe resultierenden Belastungen und Schwingungen. Als umlaufendes Bauteil wird die Hauptwelle dadurch erheblichen Wechselbelastungen ausgesetzt und ist entsprechend zu dimensionieren.

Die WO2011/058185 A2 beschreibt eine Windenergieanlage mit einem Generator und einem Getriebe.

Dem gegenüber haben sich im Stand der Technik insbesondere von der hiesigen Anmelderin getriebelose Windenergieanlagen durchgesetzt, die einen langsamdrehenden, vielpoligen Synchrongenerator einsetzen. Getriebelose Anlagen werden typischerweise direkt innerhalb der Nabe auf einem feststehenden Achszapfen gelagert, wodurch äußere Belastungen über weitgehend feststehende strukturelle Elemente in den Turm abgeleitet werden.

Langsamdrehende vielpolige Synchrongeneratoren sind wartungsfreundlich und zuverlässig, erfordern aber prinzipbedingt große Generatordurchmesser, um aufgrund der geringeren Drehzahlen dennoch ausreichende elektrische Energieerzeugung gewährleisten zu können. Aufgrund des Trends zu immer größeren Leistungsklassen deutlich oberhalb von 4 MW besteht diesbezüglich Verbesserungsbedarf. Der Erfindung lag folglich die Aufgabe zugrunde, einen Generator der eingangs bezeichneten Art dahingehend zu verbessern, dass die vorstehend genannten Nachteile möglichst weitgehend abgemildert werden. Insbesondere lag der Erfindung die Aufgabe zugrunde, einen Generator anzugeben, der im Verhältnis zur Leistungsausbeute möglichst klein dimensioniert werden kann. Ferner sollte möglichst die Effizienz in der Gewinnung elektrischer Energie nicht beeinträchtigt werden. Die Erfindung löst die ihr zugrunde liegende Aufgabe der eingangs bezeichneten Art, indem der Generator mit den Merkmalen von unabhängigem Anspruch 1 ausgebildet ist. Vorteilhafte Ausgestaltungen des erfindungsgemäßen Generators und der erfindungsgemäßen Windenergieanlage sind in den abhängigen Ansprüchen beschrieben. Insbesondere schlägt die Erfindung einen Generator vor, welcher ein einstufiges Getriebe aufweist, das dazu eingerichtet ist, antriebseitig drehfest mit einer Rotorblattnabe der Windenergieanlage zusammenzuwirken und abtriebsseitig drehfest mit dem Generatorrotor verbunden ist. Die Erfindung macht sich die Erkenntnis zunutze, dass durch die Verwendung eines einstufigen Getriebes eine Erhöhung der Drehzahl des Generatorrotors relativ zur Drehzahl der Rotorblattnabe erreicht werden kann, ohne die sonstigen Vorteile des direkt angetriebenen Generators aufgeben zu müssen, nämlich die hohe Robustheit sowie die Möglichkeit der Verwendung eines langsam drehenden vielpoligen Synchrongenerators. Die Platzierung des einstufigen Getriebes direkt am Generator stellt ferner eine signifikante Verbesserung gegenüber konventionellen getriebebehafteten Windenergieanlagen dar, die einen erheblichen konstruktiven Aufbau zur Implementierung des Getriebes neben dem Generator erfordern und eine vergleichsweise hohe Ausbreitung der Gondel der Windenergieanlage in Richtung der Rotationsachse bedingen. Das einstufige Getriebe benötigt nur minimalen Bauraum in Richtung der Rotationsache des Generators. Ferner wird durch das Implementieren des einstufigen Getriebes in den Generator ein Paradigmenwechsel ermöglicht. Bislang wurden insbesondere langsam drehende Synchrongeneratoren ausschließlich getriebelos betrieben, es ist im Stand der Technik sogar prinzipiell abgelehnt worden, an Windenergieanlagen mit Synchrongenerator, insbesondere mit langsamdrehenden Synchrongenerator ein Getriebe vorzusehen, weil dies nicht erforderlich war.

Es hat sich jedoch überraschend herausgestellt, dass durch Auswahl eines lediglich einstufigen Getriebes, welches nur eine überschaubare Übersetzungsänderung mit sich bringt, eine Erhöhung der Effizienz bezüglich der Erzeugung der elektrischen Energie erreicht werden kann. Im Vergleich zu konventionellen Windenergieanlagen können mit dem erfindungsgemäßen Generator kleinere Generatorgrößen infolge der Übersetzung des einstufigen Getriebes mit einer höheren Umdrehungszahl betrieben werden. Dies bedeutet, dass im Vergleich zu den konventionellen Anlagen einer bestimmten Leistungsklasse nun für die gleiche Leistungsklasse kleinere und signifikant leichter bauende Generatoren in der Windenergieanlage zum Einsatz kommen können, während die Vorteile des getriebelosen Triebstrangs im Wesentlichen erhalten bleiben.

Das einstufige Getriebe ist erfindungsgemäß ein übersetzendes Getriebe mit einer Übersetzung vorzugsweise in einem Bereich von 1:1,5 bis 1:10. In einer bevorzugten Weiterbildung ist das einstufige Getriebe als Planetengetriebe ausgebildet, welches ein Sonnenrad, einen Planetenträger mit einer Anzahl von Planetenrädern und ein Hohlrad aufweist, wobei die Planetenräder mit dem Sonnenrad und mit dem Hohlrad in Eingriff stehen. Vorzugsweise weist das Planetengetriebe zwei oder mehr Planetenräder, besonders bevorzugt drei Planetenräder auf.

Als besonderer Vorteil des Planetengetriebes wird angesehen, dass es hohe Robustheit und geringen Bauraum miteinander vereint, insbesondere in axialer Richtung (bezogen auf die Rotationsachse des Generators). Die Reibungsverluste des Planetengetriebes sind moderat, sodass eine Verschlechterung des Gesamtwirkungsgrads der Windenergieanlage bezüglich der Gewinnung elektrischer Energie durch Verwendung des Planetengetriebes durch die Steigung der Energieerzeugung aufgrund der höheren Drehzahl kompensiert werden kann.

In einer bevorzugten Ausführungsform ist der Planetenträger des Planetengetriebes antriebsseitig drehfest mit der Rotorblattnabe verbunden.

Erfindungsgemäß weist der Generator eine Generatorhohlwelle auf, auf welcher der Generatorrotor befestigt ist. Vorzugsweise ist die Hohlwelle drehfest mit dem Sonnenrad verbunden.

Vorzugsweise ist der vorstehend beschriebene Montageabschnitt ein erster Montageabschnitt des Generators, und der Generator weist ferner einen dem ersten Montageabschnitt in Richtung der Generatorachse gegenüberliegend angeordneten zweiten Montageabschnitt zur drehfesten Verbindung mit einem Achszapfen der Windenergieanlage auf. Der Achszapfen ist vorzugsweise dazu eingerichtet, die Rotorblattnabe zu tragen. In dieser Ausführungsform ist der Generator dazu eingerichtet, auf der gleichen Seite des Windenergieanlagenturms angeordnet zu werden, wie die Rotorblattnabe.

Vorzugsweise sind der Planetenträger und die Rotorblattnabe mittels einer Kupplung zwischenverbunden, welche wahlweise in einen eingekoppelten und einen ausgekoppelten schaltbar ist, wobei im eingekoppelten Zustand eine drehfeste Verbindung zwischen dem einstufigen Getriebe und der Rotorblattnabe besteht, und im ausgekoppelten Zustand eine relative Drehbeweglichkeit der Rotorblattnabe zu dem Generator besteht.

Das Anordnen der Rotorblattnabe und des Generators in direkter Nachbarschaft zueinander bietet den Vorteil, dass eine direkte Anbindung der Rotorblattnabe an das einstufige Getriebe des Generators möglich ist.

Gemäß einer alternativen bevorzugten Ausführungsform ist der Generator dazu ausgebildet, gegenüberliegend zu der Rotorblattnabe am Turm der Windenergieanlage angeordnet zu werden. Hierzu ist es bevorzugt, wenn der Generator ein Generatorgehäuse und eine an dem Generatorgehäuse gelagerte Hauptwelle aufweist, wobei die Hauptwelle dazu eingerichtet ist, drehfest mit der Rotorblattnabe verbunden zu werden, durch die Generatorhohlwelle hindurch geführt und koaxial zu dieser gelagert ist, und wobei der Planetenträger drehfest mit der Hauptwelle verbunden ist.

Die vorstehenden Ausführungen beziehen sich auf eine Verwendung eines Planetengetriebes als einstufiges Getriebe. Erfindungsgemäß lässt sich ein einstufiges Getriebe allerdings vorzugsweise mittels eines Magnetgetriebes realisieren. In einer weiteren bevorzugten Ausführungsform ist demnach das einstufige Getriebe als Magnetgetriebe ausgebildet, welches anstelle des Sonnenrades einen inneren permanentmagnetischen Ring, anstelle des Planetenträgers einen ferromagnetischen Zwischenring, und anstelle des Hohlrades einen äußeren permanenten magnetischen Ring aufweist.

Die Erfindung wurde vorstehend anhand eines ersten Aspekts in Bezug auf den Generator der Windenergieanlage beschrieben. Die Erfindung löst die ihr zugrunde liegende Aufgabe bei einer Windenergieanlage der eingangs bezeichneten Art in einem zweiten Aspekt, in dem die Windenergieanlage eine Rotorblattnabe, einen Turm, einen an dem Turm drehbar gelagerten Maschinenträger mit einem Montageabschnitt zur Aufnahme eines Generators, und einen mittels eines korrespondierenden Montageabschnittes an dem Maschinenträger befestigten Generator zur Erzeugung elektrischer Energie aufweist, wobei der Generator nach einer der vorstehend beschriebenen bevorzugten Ausführungsformen ausgebildet ist. Der Generator ist gemäß einer ersten bevorzugten Alternative auf einer ersten Seite des Maschinenträgers angeordnet, und die Rotorblattnabe ist auf einer dem Generator gegenüberliegenden zweiten Seite des Maschinenträgers angeordnet.

Besonders bevorzugt wird das Antriebsdrehmoment, welches von der Rotorblattnabe in die Windenergieanlage eingetragen wird, mittels einer Hauptwelle zum Generator übertragen, wobei die Hauptwelle durch eine Hohlwelle des Generators hindurch geführt wird.

In einer bevorzugten Alternative sind der Generator und die Rotorblattnabe auf derselben Seite des Maschinenträgers angeordnet, wobei besonders bevorzugt an den Generator oder eine den Generator tragende Struktur ein Achszapfen angeschlossen ist, der die Rotorblattnabe trägt.

Hierbei ist dann vorzugsweise der Generator mittels des ersten Montageabschnittes an ein korrespondierenden Montageabschnitt des Maschinenträgers befestigt, und die Rotorblattnabe ist mittels des Achszapfens, der einen korrespondierenden Montageabschnitt aufweist, an dem zweiten Montageabschnitt des Generators befestigt.

Der verwendete Generator der erfindungsgemäßen Windenergieanlage ist vorzugsweise als Synchrongenerator ausgebildet, besonders bevorzugt als vielpoliger Synchrongenerator, insbesondere als langsam drehender vielpoliger Synchrongenerator. Besonders bevorzugt ist der Generator ein Ringgenerator.

Erfindungsgemäß ist das einstufige Getriebe des Generators als Vorsatzgetriebe ausgebildet, und an einer dem Maschinenträger abgewandten Seite des Generators montiert. Hierdurch wird eine besonders leichte Zugänglichkeit zum Getriebe zu Watungszwecken erreicht.

Unter einem langsam drehenden Generator wird erfindungsgemäß ein Generator verstanden, der mit einer Umdrehungsgeschwindigkeit von 100 Umdrehungen pro Minute oder weniger rotiert.

Unter einem vielpoligen Generator wird erfindungsgemäß ein Generator mit wenigstens 48, 96, insbesondere wenigstens 192 Rotorpolen verstanden.

Unter einem Ringgenerator wird verstanden, dass die magnetisch aktiven Bereiche des Läufers und Stators, nämlich besonders die Blechpakete des Stators und Läufers, in einen ringförmigen Bereich um den Luftspalt herum angeordnet sind, der den Läufer und den Stator voneinander trennt. "Läufer" ist hierbei ein Synonym des Generatorrotors.

Der Generator ist vorzugsweise in einem inneren Bereich mit einem Radius von wenigstens 50% des mittleren Luftspaltradius frei von magnetisch wirksamen Bereichen.

Ein Ringgenerator kann auch dadurch definiert werden, dass die radiale Stärke der magnetisch aktiven Teile, oder, anders ausgedrückt, des magnetisch aktiven Bereichs, nämlich die radiale Dicke vom Innenrand des Polrads bis zum Außenrand des Stators, beziehungsweise vom Innenrand des Stators bis zum Außenrand des Läufers, im Falle eines Ausläufers, kleiner als der Luftspaltradius ist, insbesondere dass die radiale Stärke des magnetisch aktiven Bereichs des Generators weniger als 30%, insbesondere weniger als 25% des Luftspaltradius beträgt. Außerdem oder alternativ können Ringgeneratoren dadurch definiert werden, dass die Tiefe, nämlich die axiale Ausrichtung des Generators in Richtung der Rotationsachse, kleiner als der Luftspaltradius ist, insbesondere dass die Tiefe weniger als 30%, insbesondere weniger als 25% des Luftspaltradius beträgt, wobei jeweils der mittlere Teilkreis des Luftspalts gemeint ist.

Die Erfindung wird im Folgenden unter Bezugnahme auf die beigefügten Figuren anhand zweier bevorzugter Ausführungsbeispiele näher beschrieben. Hierbei zeigen:
- Fig. 1: eine schematische räumliche Ansicht einer Windenergieanlage gemäß der Erfindung,
- Fig. 2: eine schematische Querschnittsansicht durch die Gondel der Windenergieanlage gemäß Figur 1 in einem nicht beanspruchten Ausführungsbeispiel, und
- Fig. 3: eine schematische Querschnittsansicht durch eine Gondel der erfindungsgemäßen Windenergieanlage aus Figur 1 in einem beanspruchten Ausführungsbeispiel.

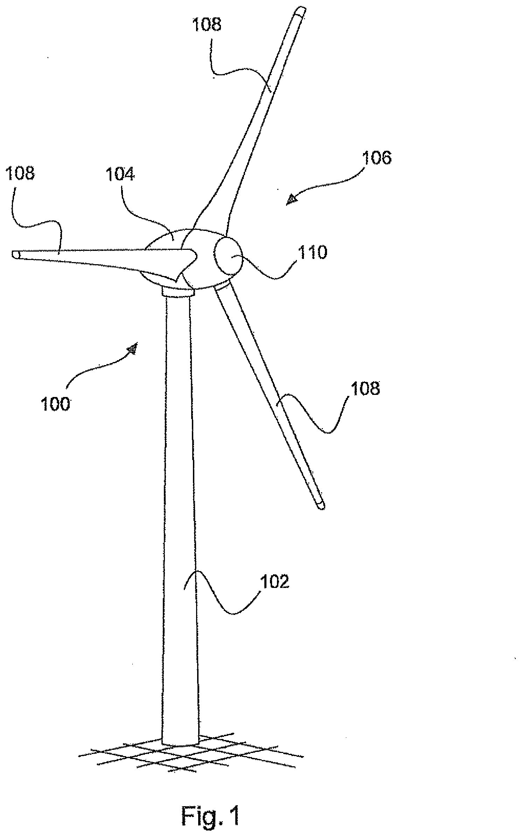

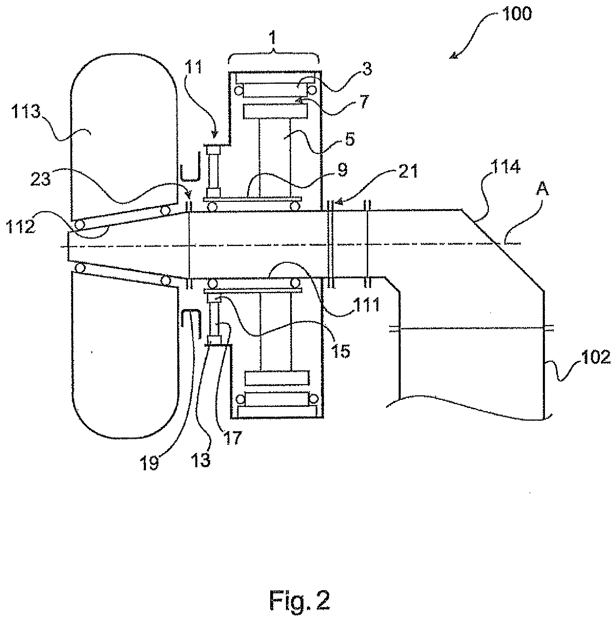

Figur 1 zeigt eine schematische Darstellung einer Windenergieanlage 100 gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und so einen Generator 1 (Figur 2) antreibt, welcher direkt oder indirekt mit dem aerodynamischen Rotor 106 gekoppelt ist. Der elektrische Generator 1 ist in der Gondel 104 angeordnet und erzeugt elektrische Energie.

In Figur 2 ist schematisch das Innenleben der Gondel 104 gemäß einem ersten Ausführungsbeispiel gezeigt. Die in Figur 1 gezeigten Rotorblätter 108 sind hier der einfachen Darstellung zuliebe nicht dargestellt.

Der Generator 1 der Windenergieanlage 100 weist einen Stator 3 und einen Generatorrotor 5 auf, der relativ zu dem Stator 3 drehbar gelagert ist. Zwischen dem Generatorrotor 5 und dem Stator 3 ist ein Luftspalt 7 ausgebildet.

Der Generatorrotor 5 ist mittels einer Generatorwelle 9 drehfest mit einem einstufigen Getriebe 11 verbunden und insbesondere ist der Generatorrotor 5 drehfest mit einem Sonnenrad 15 verbunden. Der Stator 3 ist vorzugsweise drehfest mit einem Hohlrad 13 des einstufigen Getriebes 11 verbunden.

Das einstufige Getriebe 11 weist ferner eine Anzahl von Planetenrädern auf, die an einem Planetenträger 17 angeordnet sind, wobei der Planetenträger 17 mittels einer Kupplung 19 mit der Rotorblattnabe 113 verbunden ist. Die Rotationsbewegung der Rotorblattnabe 113 wird folglich mittels des Planetenträgers 17 des einstufigen Getriebes 11 auf den Generatorrotor 5 übertragen, wobei aufgrund des feststehenden und mit dem Stator drehfest verbundenen Hohlrandes 13 die Drehbewegung der Rotorblattnabe 113 auf das Sonnenrad 15 übersetzt wird, so dass sich die Generatorwelle 9 und somit der Generatorrotor 5 schneller drehen als die Rotorblattnabe 113.

Der Generator 1 weist einen ersten Montageabschnitt 21, mit dem der Generator 1 an einem Maschinenträger 114 mittelbar oder unmittelbar befestigt ist. Der Montageabschnitt 21 ist vorzugsweise als Flanschabschnitt ausgebildet.

Der Maschinenträger 114 ist seinerseits, vorzugsweise mittels einer Drehverbindung, an den Turm 102 der Windenergieanlage befestigt. Der Generator 1 und die Rotorblattnabe 113 sind vorzugsweise koaxial zu einer Generatorachse A angeordnet.

Die Rotorblattnabe 113 ist vorzugsweise auf einem Achszapfen 112 gelagert, wobei die Rotorblattnabe 113 beziehungsweise der Achszapfen 112 mittels eines zweiten Montageabschnitts 23 (vorzugsweise als Flanschabschnitt ausgebildet) an dem Generator 1 befestigt sind, folglich auf derselben Seite des Maschinenträgers 114 einer Windenergieanlage 100 angeordnet.

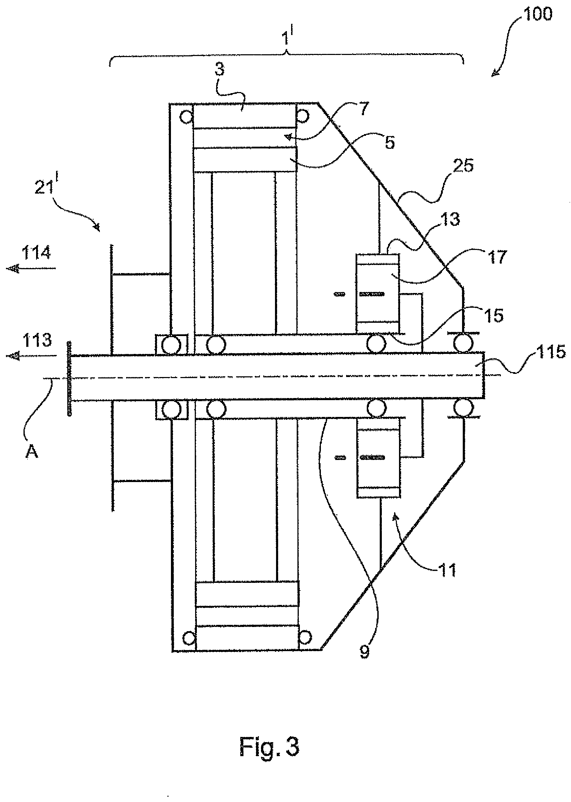

In Figur 3 ist eine Generatoranordnung gemäß einem zweiten bevorzugten Ausführungsbeispiels gezeigt. Figur 3 zeigt einen Generator 1' der im Unterschied zu dem Generator gemäß Figur 2 nicht zwei Montageabschnitte, sondern lediglich einen einzigen Montageabschnitt 21' aufweist, oder vorzugsweise als Flanschabschnitt ausgebildet ist, mittels dessen der Generator 1' am Maschinenträger 114 der Windenergieanlage 100 angeschlossen wird. Der Generator 1' wird im Unterschied zum Generator 1 gemäß Figur 2 nicht auf derselben Seite relativ zum Maschinenträger 114 angeordnet wie die Rotorblattnabe 113 sondern auf einer relativ zum Maschinenträger 114 gegenüberliegenden Seite der Rotorblattnabe 113 am Maschinenträger 114 befestigt, sodass sich die durch die Eigengewichte der Rotorblattnabe und des Generators 1' ergebenden Kippmomente auf dem Turm 102 zumindest teilweise ausgleichen.

Der Generator 1' weist ebenso wie der Generator 1 aus Figur 2 einen Stator 3, Rotor 5 und dazwischen ausgebildeten Luftspalt 7 aus.

Der Generatorrotor 5 ist mittels einer Generatorwelle 9 drehfest mit dem Sonnenrad 15 des einstufigen Getriebes 11 verbunden, während der Stator 3 drehfest mit dem Hohlrad 13 des einstufigen Getriebes 11 verbunden ist. Der Planetenträger 17 mit seiner Anzahl von Planetenrädern übersetzt wiederum (systematisch identisch zu dem Ausführungsbeispiel der Figur 2) die Rotationsbewegung der Rotorblattnabe 113 auf den Generatorrotor 5. Im Unterschied zu Figur 2 ist die Rotorblattnabe 113 aber nicht direkt mit dem Planetenträger 17 gekoppelt, sondern über eine Hauptwelle 115, die durch die als Hohlwelle ausgebildete Generatorwelle 9 hindurchgeführt ist. In der Anordnung gemäß Figur 3 ist das einstufige Getriebe 11 ebenso als Planetengetriebe ausgebildet, allerdings als Vorsatzgetriebe auf einer dem Maschinenträger 114 abgewandten Seite und einer der Rotorblattnabe 113 abgewandten Seite angeordnet, sodass es optional, falls entsprechende Öffnungen in dem Generatorgehäuse 25 vorgesehen sind, von außen zugänglich ist, ohne an die Rotorblattnabe 113 angreifen zu müssen.

## Patentansprüche

1. Generator (1) für eine Windenergieanlage (100), mit
einem Generatorstator (3) mit einem Montageabschnitt (21') zur Befestigung des Generatorstators (3) an einem Maschinenträger (114) der Windenergieanlage (100), und
einem um eine Generatorachse (A) drehbeweglich relativ zu dem Generatorstator (3) auf einer Generatorhohlwelle (9) gelagerten Generatorrotor (5),
wobei der Generator (1) ein einstufiges übersetzendes Getriebe (11) aufweist, welches abtriebsseitig drehfest mit dem Generatorrotor (5) verbunden ist und dazu eingerichtet ist, antriebsseitig drehfest mit einer Rotorblattnabe (113) zusammenzuwirken,
**dadurch gekennzeichnet, dass** das einstufige übersetzende Getriebe (11) des Generators (1) als Vorsatzgetriebe ausgebildet ist und an einer Seite des Generators (1) montiert ist, die von der Seite des Generators (1) abgewandt ist, die den Montageabschnitt (21') zur Befestigung des Generatorstators (3) am Maschinenträger (114) aufweist.

2. Generator (1) nach Anspruch 1,
wobei das einstufige übersetzende Getriebe (11) als Planetengetriebe ausgebildet ist, das ein Sonnenrad (15), einen Planetenträger (17) mit einer Anzahl von Planetenrädern, und ein Hohlrad (13) aufweist, wobei die Planetenräder mit dem Sonnenrad (15) und mit dem Hohlrad (13) in Eingriff stehen.

3. Generator (1) nach Anspruch 2,
wobei das Sonnenrad (15) abtriebsseitig drehfest mit dem Generatorrotor (5) verbunden ist.

4. Generator (1) nach Anspruch 2 oder 3,
wobei der Planetenträger (17) antriebsseitig drehfest mit der Rotorblattnabe (113) verbunden ist.

5. Generator (1) nach einem der vorstehenden Ansprüche,
mit einer Generatorhohlwelle (9), auf welcher der Generatorrotor (5) befestigt ist.

6. Generator nach einem der Ansprüche 1 bis 5,
mit einem Generatorgehäuse (25) und einer an dem Generatorgehäuse (25) gelagerten Hauptwelle (115), wobei die Hauptwelle (115) dazu eingerichtet ist, drehfest mit der Rotorblattnabe (113) verbunden zu werden, durch die Generatorhohlwelle (9) hindurchgeführt und koaxial zu dieser gelagert ist, und wobei der Planetenträger (17) drehfest mit der Hauptwelle (115) verbunden ist.

7. Generator (1) nach einem der Ansprüche 2 bis 6, wobei das einstufige Getriebe (3) als Magnetgetriebe ausgebildet ist, welches anstelle des Sonnenrades (15) einen inneren permanentmagnetischen Ring, anstelle des Planetenträgers (11) einen ferromagnetischen Zwischenring, und anstelle des Hohlrades (9) einen äußeren permanentmagnetischen Ring aufweist.

8. Windenergieanlage (100), mit
einer Rotorblattnabe (113),
einem Turm (102),
einem an dem Turm drehbar gelagerten Maschinenträger (114) mit einem Montageabschnitt (21, 21') zur Aufnahme eines Generators, und
einem mittels eines korrespondierenden Montageabschnitts (21, 21') an dem Maschinenträger (14) befestigten Generator (1) zur Erzeugung elektrischer Energie, wobei der Generator (1) nach einem der vorstehenden Ansprüche ausgebildet ist.

9. Windenergieanlage (100) nach Anspruch 8,
wobei der Generator (1') nach einem der Ansprüche 1 bis 7 ausgebildet ist.

10. Windenergieanlage (100) nach Anspruch 8,
wobei die Rotorblattnabe (113) und der Generator (1) auf derselben Seite des Maschinenträgers (114) angeordnet sind.

11. Windenergieanlage nach Anspruch 10,
wobei der Generator (1) mittels des ersten Montageabschnittes (21) an einem korrespondierenden Montageabschnitt des Maschinenträgers (114) befestigt ist, und die Rotorblattnabe (113) mittels eines Achszapfens (112), der einen korrespondierenden Montageabschnitt aufweist, an dem zweiten Montageabschnitt (23) des Generators (1) befestigt ist.

12. Windenergieanlage (100) nach einem der Ansprüche 8 bis 11,
wobei der Generator (1) als Synchrongenerator ausgebildet ist.

## Claims

1. Generator (1) for a wind turbine (100), comprising
a generator stator (3) with a mounting section (21') for fastening the generator stator (3) to a machine carrier (114) of the wind turbine (100), and
a generator rotor (5) mounted on a generator hollow shaft (9) so as to be rotatable relative to the generator stator (3) about a generator axis (A),
wherein the generator (1) comprises a single-stage step-up gear (11), which is connected on the output side in a rotationally fixed manner to the generator rotor (5) and is configured to cooperate on the drive side in a rotationally fixed manner with a rotor blade hub (113),
**characterized in that** the single-stage step-up gear (11) of the generator (1) is designed as an add-on gearbox and is mounted on a side of the generator (1) that faces away from the side of the generator (1) that has the mounting section (21') for fastening the generator stator (3) to the machine carrier (114).

2. Generator (1) according to claim 1, wherein the single-stage step-up gear (11) is designed as a planetary gear, comprising a sun gear (15), a planet carrier (17) with a number of planet gears, and a ring gear (13), wherein the planet gears mesh with the sun gear (15) and with the ring gear (13).

3. Generator (1) according to claim 2, wherein the sun gear (15) is connected on the output side in a rotationally fixed manner to the generator rotor (5).

4. Generator (1) according to claim 2 or 3, wherein the planet carrier (17) is connected on the drive side in a rotationally fixed manner to the rotor blade hub (113).

5. Generator (1) according to any one of the preceding claims, comprising a generator hollow shaft (9) on which the generator rotor (5) is mounted.

6. Generator according to any one of claims 1 to 5, comprising a generator housing (25) and a main shaft (115) mounted on the generator housing (25), wherein the main shaft (115) is configured to be connected in a rotationally fixed manner to the rotor blade hub (113), is guided through the generator hollow shaft (9) and is mounted coaxially thereto, and wherein the planet carrier (17) is connected in a rotationally fixed manner to the main shaft (115).

7. Generator (1) according to any one of claims 2 to 6, wherein the single-stage gear (3) is designed as a magnetic gear, which comprises, instead of the sun gear (15), an inner permanent magnet ring, instead of the planet carrier (11), a ferromagnetic intermediate ring, and instead of the ring gear (9), an outer permanent magnet ring.

8. Wind turbine (100), comprising
a rotor blade hub (113),
a tower (102),
a machine carrier (114) rotatably mounted on the tower with a mounting section (21, 21') for receiving a generator, and
a generator (1) fastened to the machine carrier (14) by means of a corresponding mounting section (21, 21') for generating electrical energy, wherein the generator (1) is designed according to any one of the preceding claims.

9. Wind turbine (100) according to claim 8, wherein the generator (1') is designed according to any one of claims 1 to 7.

10. Wind turbine (100) according to claim 8, wherein the rotor blade hub (113) and the generator (1) are arranged on the same side of the machine carrier (114).

11. Wind turbine according to claim 10, wherein the generator (1) is fastened by means of the first mounting section (21) to a corresponding mounting section of the machine carrier (114), and the rotor blade hub (113) is fastened by means of an axle journal (112), which comprises a corresponding mounting section, to the second mounting section (23) of the generator (1).

12. Wind turbine (100) according to any one of claims 8 to 11, wherein the generator (1) is designed as a synchronous generator.

## Revendications

1. Générateur (1) pour une éolienne (100), comprenant
un stator de générateur (3) avec une section de montage (21') pour la fixation du stator de générateur (3) à un support de machine (114) de l'éolienne (100), et
un rotor de générateur (5) monté sur un arbre creux du générateur (9) de manière rotative par rapport au stator de générateur (3) autour d'un axe du générateur (A),
le générateur (1) comprenant un engrenage multiplicateur à un étage (11), qui est relié côté sortie de manière solidaire en rotation au rotor de générateur (5) et qui est conçu pour coopérer côté entraînement de manière solidaire en rotation avec un moyeu de pales de rotor (113),
**caractérisé en ce que** l'engrenage multiplicateur à un étage (11) du générateur (1) est réalisé sous forme de réducteur rapporté et est monté sur un côté du générateur (1) qui est opposé au côté du générateur (1) comportant la section de montage (21') pour la fixation du stator de générateur (3) au support de machine (114).

2. Générateur (1) selon la revendication 1,
dans lequel l'engrenage multiplicateur à un étage (11) est réalisé sous forme d'engrenage planétaire, comprenant un pignon solaire (15), un porte-satellites (17) avec un certain nombre de satellites, et une couronne dentée (13), les satellites étant en prise avec le pignon solaire (15) et avec la couronne dentée (13).

3. Générateur (1) selon la revendication 2,
dans lequel le pignon solaire (15) est relié côté sortie de manière solidaire en rotation au rotor de générateur (5).

4. Générateur (1) selon la revendication 2 ou 3,
dans lequel le porte-satellites (17) est relié côté entraînement de manière solidaire en rotation au moyeu de pales de rotor (113).

5. Générateur (1) selon l'une des revendications précédentes,
comprenant un arbre creux du générateur (9) sur lequel le rotor de générateur (5) est fixé.

6. Générateur selon l'une des revendications 1 à 5,
comprenant un carter de générateur (25) et un arbre principal (115) monté sur le carter de générateur (25), l'arbre principal (115) étant conçu pour être relié de manière solidaire en rotation au moyeu de pales de rotor (113), étant guidé à travers l'arbre creux du générateur (9) et étant monté coaxialement à celui-ci, et le porte-satellites (17) étant relié de manière solidaire en rotation à l'arbre principal (115).

7. Générateur (1) selon l'une des revendications 2 à 6, dans lequel l'engrenage à un étage (3) est réalisé sous forme d'engrenage magnétique, qui comprend, à la place du pignon solaire (15), un anneau magnétique permanent intérieur, à la place du porte-satellites (11), un anneau intermédiaire ferromagnétique, et à la place de la couronne dentée (9), un anneau magnétique permanent extérieur.

8. Éolienne (100), comprenant
un moyeu de pales de rotor (113),
une tour (102),
un support de machine (114) monté de manière rotative sur la tour et comportant une section de montage (21, 21') destinée à recevoir un générateur, et un générateur (1) fixé au support de machine (14) au moyen d'une section de montage correspondante (21, 21') pour produire de l'énergie électrique, le générateur (1) étant réalisé selon l'une des revendications précédentes.

9. Éolienne (100) selon la revendication 8,
dans laquelle le générateur (1') est réalisé selon l'une des revendications 1 à 7.

10. Éolienne (100) selon la revendication 8,
dans laquelle le moyeu de pales de rotor (113) et le générateur (1) sont disposés du même côté du support de machine (114).

11. Éolienne selon la revendication 10,
dans laquelle le générateur (1) est fixé au moyen de la première section de montage (21) à une section de montage correspondante du support de machine (114), et le moyeu de pales de rotor (113) est fixé au moyen d'un axe de moyou (112), comportant une section de montage correspondante, à la deuxième section de montage (23) du générateur (1).

12. Éolienne (100) selon l'une des revendications 8 à 11,
dans laquelle le générateur (1) est réalisé sous forme de générateur synchrone.
